Europäisches Patentamt

(19) European Patent Office

Office européen des brevets

(11) Publication number: **0 117 609
B1**

(12) **EUROPEAN PATENT SPECIFICATION**

(45) Date of publication of patent specification: **10.09.86**

(21) Application number: **84300252.8**

(22) Date of filing: **17.01.84**

(51) Int. Cl.⁴: **F 16 D 65/12**

(54) Disc brake assembly.

(30) Priority: **25.02.83 US 469647**

(43) Date of publication of application:
**05.09.84 Bulletin 84/36**

(45) Publication of the grant of the patent:
**10.09.86 Bulletin 86/37**

(84) Designated Contracting States:
**DE FR GB IT**

(56) References cited:
**FR-A-1 498 214
US-A-1 818 447
US-A-3 978 945**

(73) Proprietor: **GENERAL MOTORS CORPORATION
General Motors Building 3044 West Grand
Boulevard
Detroit Michigan 48202 (US)**

(72) Inventor: **Flaim, Thomas Alfred
5072 Blair Drive
Troy Michigan 48098 (US)**
Inventor: **Stephens, Glen
1301 Duck Creek Lane
Ortonville Michigan 48462 (US)**
Inventor: **Miller, Edwin Joseph
117 Bradley
Romeo Michigan 48065 (US)**

(74) Representative: **Breakwell, John Neil Bower
et al
GM Patent Section Luton Office (F6) P.O. Box
No. 3 Kimpton Road
Luton Beds. LU2 0SY (GB)**

Courier Press, Leamington Spa, England.

## Description

This invention relates to a disc brake assembly as specified in the preamble of claim 1, for example as disclosed in US—A—1,818,447.

The invention is concerned with a disc brake assembly permitting noise-generating vibrations occurring in a disc brake rotor during brake application to be effectively damped, whilst maintaining a secure mounting relation for the vehicle wheel and the disc brake rotor.

For this purpose, a disc brake assembly in accordance with the present invention is characterised by the measures specified in the characterising portion of claim 1.

In one specific form of disc brake assembly in accordance with the present invention, damping material is provided between a conically tapered rotor hat section and a similarly tapered bearing flange. The conically tapered surfaces of the rotor and bearing flange form a small axially extending annular space between the tapered surfaces, and a layer of damping material is provided in this space. The precise spacing of the tapered surfaces is controlled by having mounting faces on the rotor hat section and one side of the bearing flange which are in direct and secure axial engagement when assembled. The thickness of the damping material in the axial direction is slightly greater than the available space between the conically tapered surfaces, so that when the rotor is secured to the bearing flange and the mounting faces are in tight engagement, the damping material is squeezed. It is preferable to use a viscoelastic damping material: an example of such material is rubber-coated steel shim stock, although other damping materials may alternatively be used.

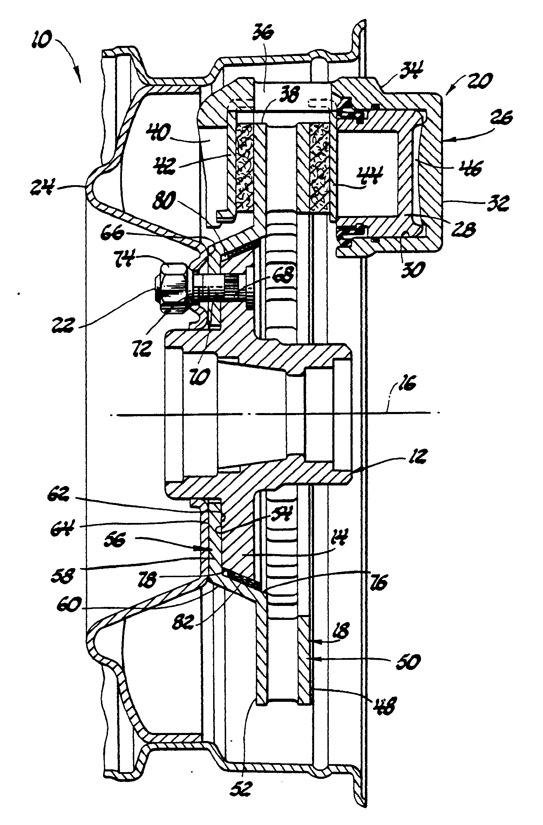

In the drawing:

The single Figure of the drawing is a sectional view, with parts broken away or in elevation, of a preferred embodiment of a disc brake assembly in accordance with the present invention, in the form of a vehicle wheel assembly including a bearing hub with flange, a brake rotor, a wheel and a brake caliper assembly.

As is shown in the drawing, a vehicle wheel and brake assembly 10 includes a bearing hub 12 having a flange 14 extending therefrom axially perpendicular to the hub axis 16. The axis 16 may be the axis of a stub axle provided as part of a steering knuckle, not shown but well known in the art. A brake rotor 18 forming part of a disc brake assembly 20 is secured to the bearing hub 12 by means of several mounting studs 22 retained by stud nuts 74. The vehicle wheel 24 is also secured to the bearing hub by the mounting studs 22 and nuts 74. A wheel tyre, not shown, is mounted on the wheel as well known in the art.

The disc brake assembly 20 also includes a brake caliper assembly 26, portions of which are illustrated in the drawing. The particular caliper assembly shown is of the sliding-caliper type, wherein an actuating piston 28 is reciprocably received in a cylinder 30 formed in an inboard leg 32 of a caliper housing 34. A housing bridge section 36 extends across the outer periphery 38 of the brake rotor 18, and connects the inboard caliper leg 32 to an outboard caliper leg 40. An outboard brake shoe assembly 42 is mounted on the caliper housing 34 so as to be activated by the outboard caliper leg 40 for brake actuation. An inboard brake shoe assembly is similarly mounted adjacent the inboard leg 32, and is engaged by the piston 28 so that brake actuating pressure when introduced into a chamber 46 of the cylinder 30 will move the piston and the inboard brake shoe assembly into brake-actuating engagement with a braking surface 48 on one side of a braking section 50 of the brake rotor 18. The caliper housing 34 will be moved by the brake actuating pressure so that the outboard caliper leg 40 will move the outboard brake shoe assembly 42 into brake-actuating engagement with the braking surface 52 on the axially opposite side of the rotor braking section 50 from the braking surface 48.

Other types of caliper assembly could alternatively be used in conjunction with the rotor damping arrangement in conformity with the present invention.

The bearing hub flange 14 has a side defining a mounting face 54. The rotor 18 has a hat-shaped section 56 defined by a crown portion 58, and an intermediate portion 60 joining together the crown portion 58 and the rotor braking section 50. The crown portion 58 has oppositely disposed mounting faces 62 and 64 formed thereon. The mounting face 62 is in mating relation with the mounting face 54 of the bearing hub flange 14. The mounting face 64 is axially opposite the mounting face 62, and is in mating relation with a wheel mounting face 66 provided at the inner periphery of the wheel 24. The mounting studs 22 are received in axially extending openings 68 formed in circumferentially spaced relation through the flange 14. The studs 22 also extend through openings 70 formed in the crown portion 58, and openings 72 formed in the inner peripheral portion of the wheel 24 defining the wheel mounting face 66. The stud nuts 74 threaded on the studs 22 engage the inner periphery of the wheel in a manner well known in the art. When the nuts 74 are tightened, they force the mounting face 66 at the inner periphery of the wheel 24 into secured engagement with the mounting face 64 of the rotor crown portion 58. This also forces the mounting face 62 of the rotor crown portion 58 into secure engagement with the mounting face 54 of the flange 14.

The intermediate portion 60 of the hat-shaped section 56 of the brake rotor 18 is conically tapered to define a frusto-conical portion having a frusto-conical tapered inner surface 76. The diameter of the frusto-conical inner surface 76 is greater at the point at which the intermediate portion 60 joins the rotor brake surface 50 than it is at the point at which the intermediate portion 60 joins the crown portion 58. The circumferential outer surface of the flange 14 is also conically tapered to define a frusto-conical outer surface 78 which is positioned in mating relation with the inner surface 76, but is axially spaced therefrom. Thus a space 80, which is conically tapered in the same frusto-conical manner as the surfaces 76 and 78, is defined between these surfaces, and has an axially extending component. The precise design spacing between the surfaces 76 and 78 is defined when the mounting face 62 is in secure face engagement with the mounting face 54.

Damping means 82 formed of suitable damping material is received in the space 80 and extends circumferentially about the hub flange 14 and circumferentially within the intermediate portion 60 of the hat-shaped section 56. The damping material 82 is preferably of such a thickness in its free form as to be squeezed between the surfaces 76 and 78 when the nuts 74 are tightened on the studs 22 until the mounting face 62 securely engages the flange side 54. Various damping materials may be used: it has been found that rubber-coated steel shim stock, as currently used as damping material attached to the back of disc brake shoes, will provide excellent damping.

The braking section 50 of the rotor 18 tends to vibrate in directions extending parallel to the axis of rotation 16. By providing the damping material 82 that is disposed in the intermediate portion 60 of the rotor hat-shaped section 56, in engagement with the surface 78 of the bearing hub flange 14, the damping material is rigidly backed, and in operation effectively decreases noise generated by the vibrations of the braking section 50 occurring during brake actuation. It is important to position the damping material 82 so that it does not lessen the security between the mounting flange 14 and the rotor 18 and wheel 24. The torque exerted on the nuts 74 to place the mounting studs 22 in tension so as to secure the wheel and rotor to the bearing hub is not adversely affected, since direct mounting face engagement of these elements is provided, and the securing force is not required to pass through the damping material.

Thus the precise spacing of the conically tapered surfaces 76 and 78 obtained when the mounting faces 54 and 62 are interengaged precisely controls the amount of compression of the damping means 82, and contributes to its damping function and retention whilst maintaining a secure mounting relation for the vehicle wheel 24 and the disc brake rotor 18. The securing force thereby passes primarily through the interengaged mounting faces 54 and 62, and not primarily through the damping means 82.

**Claims**

1. A disc brake assembly in which vibration-damping means (82) is interposed between a hub flange (14) of a vehicle wheel (24) and a disc member (18) that is connected to rotate with the vehicle wheel, characterised in that the assembly (20) comprises a brake rotor (18) rotatable about an axis (16) and including a braking section (50) formed as an annulus with axially opposite braking surfaces (48 and 52), the braking section being subject during brake actuation to noise-generating vibrations, a bearing hub (12) and flange (14) also rotatable about the said axis (16) and adapted for mounting the brake rotor (18) and a wheel (24) to be braked, a hat-shaped section (56) including a crown portion (58) on the brake rotor (18) providing a mounting face (62) for secure mounting face engagement with one side (54) of the bearing flange (14) and an intermediate portion (60) joining together the crown portion (58) and the braking section (50), the hat-shaped section (56) having a frusto-conical inner surface (76) formed on the intermediate portion (60), and the bearing flange (14) having a frusto-conical outer surface (78) formed thereon complementary to the said frusto-conical inner surface (76), the frusto-conical outer surface (78) of the bearing flange (14) being so sized relative to the frusto-conical inner surface (76) of the hat-shaped section (56) that when the bearing flange (14) and the hat-shaped section (56) are in secure mounting engagement at the mounting face (62) a predetermined frusto-conically extending space (80) is defined between the inner surface (76) of the hat-shaped section and the outer surface (78) of the bearing flange (14) on the axially opposite side of the brake rotor (18) from the wheel, and damping means (82) received in the frusto-conically extending space (80) between the said inner (76) and outer (78) surfaces and engaged by the said inner and outer surfaces (76 and 78) in axially pressed relation when the bearing flange (14) and the hat-shaped section (56) are in secured mounting engagement at the said mounting face (62), whereby the damping means (82) is effective to damp the aforementioned vibrations set up in the braking section (50) of the brake rotor (18) during braking by the disc brake assembly (20).

2. A disc brake assembly according to claim 1, characterised in that the brake rotor comprises a disc (18) subject during brake actuation to noise-generating vibrations in axial directions of the disc (18), the bearing flange of the hub (12) comprises a disc and wheel mounting flange (14), the intermediate portion (60) of the disc (18) has a component of axially displaced extension, the space accommodating the damping means (82) comprises an axially extending space (80) defined between the said inner and outer surfaces (76 and 78), and the damping means (82) is positioned on the axially opposite side of the crown portion (58) of the hat-shaped section (56) of the disc (18) from the mounting position of a wheel (24) as aforesaid that is adapted to be braked by the disc brake assembly (20).

**Patentansprüche**

1. Scheibenbremsen-Anordnung, bei der vibrationsdämpfende Mittel (82) zwischen einem Nabenflansch (14) eines Fahrzeugrades (24) und einem scheibenförmigen Teil (18) eingesetzt sind, das drehfest mit dem Fahrzeugrad verbunden ist, dadurch gekennzeichnet, daß die Anordnung (20) einen um eine Achse (16) drehbaren Bremsrotor (18) umfaßt, der einen ringförmig mit axial einander entgegengesetzt liegenden Bremsflächen (48 und 52) ausgebildeten Bremsabschnitt (50) enthält, wobei der Bremsabschnitt während Bremsbetätigung geräuscherzeugenden Vibrationen unterworfen ist, eine Lagernabe (12) und ein -flansch (14) ebenfalls um die Achse (16) drehbar und zum Anbringen des Bremsrotors (18) und eines abzubremsenden Rades (24) ausgelegt sind, ein hutförmiger Abschnitt (56) mit einem Kronenanteil (58) an dem Bremsrotor (18) eine Befestigungsfläche (62) zum sicheren Anbringen in Flächenanlage mit einer Seite (54) des Lagerflansches (14) schafft und ein Zwischenabschnitt (60) den Kronenanteil (58) und den Bremsabschnitt (50) verbindet, der hutförmige Abschnitt (56) mit einer an dem Zwischenabschnitt (60) ausgebildeten kegelstumpfförmigen Innenfläche (76) versehen ist und der Lagerflansch (14) eine darauf ausgebildete kegelstumpfförmige Außenfläche (78) besitzt, komplementär zu der kegelstumpfförmigen Innenfläche (76), wobei die kegelstumpfförmige Außenfläche (78) des Lagerflansches (14) in ihrer Größe relativ zu der kegelstumpfförmigen Innenfläche (76) des hutförmigen Abschnittes (76) so bemessen ist, daß, wenn der Lagerflansch (14) und der hutförmige Abschnitt (56) in sicherer Befestigungsanlage an der Befestigungsfläche (62) sind, ein vorbestimmter, sich kegelstumpfförmig erstreckender Raum (80) zwischen der Innenfläche (76) des hutförmigen Abschnittes und der Außenfläche (78) des Lagerflansches (14) an der axial gegenüberliegenden Seite zum Bremsrotor (18) des Rades bestimmt ist und in dem sich kegelstumpförmig erstreckenden Raum (80) zwischen den Innen- (76) und Außen- (78) flächen Dämpfungsmittel (82) aufgenommen und in Eingriff mit den Innen- und Außenflächen (76 und 78) in Axialdruck-Beziehung sind, wenn der Lagerflansch (14) und der hutförmige Abschnitt (56) in sicherer Befestigungsanlage an der Befestigungsfläche (62) sind, wodurch die Dämpfungsmittel (82) zum Dämpfen der erwähnten, in dem Bremsabschnitt (50) des Bremsrotors (18) beim Abbremsen durch die Scheibenbremsen-Anordnung (20) entstehenden Vibrationen wirksam sind.

2. Scheibenbremsen-Anordnung nach Anspruch 1, dadurch gekennzeichnet, daß der Bremsrotor eine während Bremsbetätigung geräuscherzeugenden Vibrationen in Axialrichtung unterworfene Scheibe (18) umfaßt, daß der Lagerflansch der Nabe (12) eine Scheibe und einen Radmontage-Flansch (14) umfaßt, daß der Zwischenabschnitt (60) der Scheibe (18) eine Komponente mit axial versetzter Ausdehnung besitzt, daß der die Dämpfungsmittel (82) aufnehmende Raum einen zwischen der Innen- und der Außenfläche (76, 78) bestimmten axial erstreckenden Raum (80) umfaßt und daß die Dämpfungsmittel (82) an der der Befestigungsstelle eines Rades (24), wie erwähnt, das zum Abbremsen durch die Scheibenbremsen-Anordnung (20) ausgelegt ist, axial gegenüberliegenden Seite des Kronenanteils (58) des hutförmigen Abschnittes (56) der Scheibe (18) angeordnet sind.

**Revendications**

1. Ensemble à frein à disque dans lequel des moyens d'amortissement de vibrations (82) sont interposés entre un flasque de moyeu (14) d'une roue de véhicule (24) et une pièce formant disque (18) qui est reliée de façon à tourner avec la roue de véhicule, caractérisé en ce que l'ensemble (20) comprend un rotor de frein (18) monté rotatif autour d'un axe (16) et comprenant une section de freinage (50) se présentant sous la forme d'un anneau ayant des surfaces de freinage opposées dans le sens axial (48 et 52), cette section de freinage étant soumise en cours de manoeuvre du frein à des vibrations engendrant du bruit, un moyeu-palier (12) et un flasque (14) également montés rotatifs autour dudit axe (16) et adaptés pour le montage du rotor de frein (18) et d'une roue (24) à freiner, une section en forme de chapeau (56) comprenant une partie en couronne (58) sur le rotor de frein (18) et présentant une face de montage (62) pour un contact serré entre des faces de montage avec un côté (54) du flasque de palier (14) et une portion intermédiaire (6) raccordant la partie en couronne (58) et la section de freinage (50), la section en forme de chapeau (56) présentant une surface intérieure tronconique (76) ménagée sur la portion intermédiaire (60), et le flasque de palier (14) présentant une surface extérieure tronconique (78) ménagée sur lui et complémentaire de ladite surface intérieure tronconique (76), la surface extérieure tronconique (78) du flasque de palier (14) étant dimensionnée par rapport à la surface intérieure tronconique (76) de la section en forme de chapeau (56) de façon telle que, lorsque le flasque de palier (14) et la section en forme de chapeau (56) sont en contact de montage serré sur la face de montage (62), un espace prédéterminé de forme tronconique (80) se trouve délimité entre la surface intérieure (76) de la section en forme de chapeau et la surface extérieure (78) du flasque de palier (14) sur le côté du rotor de frein (18) qui est opposé, dans le sens axial, à la roue, et des moyens d'amortissement (82) logés dans l'espace de forme tronconique (80) situé entre lesdites surfaces intérieure (76) et extérieure (78) et qui sont en contact avec lesdites surfaces intérieure et extérieure (76 et 78) en relation de serrage dans le sens axial lorsque le flasque de palier (14) et la section en forme de chapeau (56) sont en contact de montage serré sur ladite face de montage (62), de sorte que ces moyens d'amortissement (82) agissent de façon à amortir les vibrations précitées créées dans la section de freinage (50) du rotor de frein (18) au cours du freinage à l'aide de l'ensemble à frein à disque (20).

2. Ensemble à frein à disque selon la revendication 1, caractérisé en ce que le rotor de frein comprend un disque (18) soumis en cours de manoeuvre du frein à des vibrations engendrant du bruit dans des directions axiales du disque (18), le flasque de palier du moyeu (12) comprend un flasque (14) de montage du disque et de la roue, la portion intermédiaire (60) du disque (18) présente une partie axiale, l'espace contenant les moyens d'amortissement (82) est constitué par un espace (80) s'étendant axialement défini entre lesdites surfaces intérieure et extérieure (76 et 78), et les moyens d'amortissement (82) sont positionnés sur le côté, qui se trouve à l'opposé dans le sens axial de la partie en couronne (58) de la section en forme de chapeau (56) du disque (18), par rapport à la position de montage de la roue (24), qui est adaptée de façon à être freinée par l'ensemble· à frein à disque (20), comme indiqué précédemment.